# EUROPEAN PATENT SPECIFICATION

(11) **EP 2 882 669 B1**
(45) Date of publication and mention of the grant of the patent: **19.04.2017**
(21) Application number: 13732565.0
(22) Date of filing: 01.07.2013
(51) Int. Cl.: B65D 85/816, A47J 31/06

(54) **CAPSULE AND SYSTEM FOR BEVERAGE PREPARATION**
KAPSEL UND SYSTEM ZUR HERSTELLUNG VON GETRÄNKEN
CAPSULE ET SYSTÈME DE PRÉPARATION DE BOISSON

(30) Priority: 16.07.2012 EP 12005214
(43) Date of publication of application: 17.06.2015
(73) Proprietor: Tuttoespresso S.r.l., 20121 Milano (IT)
(72) Inventor: DOGLIONI MAJER, Luca, I-22010 Carate Urio (IT)
(74) Representative: Gislon, Gabriele
(86) International application number: PCT/EP2013/063848
(87) International publication number: WO 2014/012778

(56) References cited:
- EP-A1- 2 287 090
- WO-A1-2011/027259
- WO-A1-2011/159162
- WO-A1-2012/080501
- US-A1- 2010 064 899

## Description

### Technical field

The present invention relates to a capsule for preparing beverage, such as coffee, from a dose of one or more products contained inside a capsule by a brewing liquid injected into the capsule to extract the product contained therein. The invention also relates to a system for beverage preparation comprising a capsule according to the invention and a brewing device for injecting the brewing liquid into the capsule and provided with piercing means intended to perforate the capsule, to provide at least one passage for the injection of the brewing liquid.

### Background of the invention

These types of capsules have been known from the 1930's. Beverage capsules comprise a hollow container portion that houses a dose of at least one extractable or reconstitutable product, generally ground coffee, but also tea herbal extracts, instant i.e. powdered drinks and liquid concentrates. The capsules also comprise a portion that interacts with a brewing device to prepare the required beverage. The typical brewing device comprises water heating means, an enclosing member, or receptacle, intended to cooperate with the capsule to define a preparation chamber and a pump or similar means so that the brewing liquid or solvent, usually but not exclusively hot water under pressure, can be supplied to the capsule for the extraction or reconstitution of the beverage from the dose of product contained therein.

In a known beverage preparation process, a capsule is fed into the receptacle of the brewing device and is fed with the brewing solvent, such as hot water. The injected solvent passes through the capsule and thus creates by dissolving the soluble solids contained in the foodstuff or solubilising the powder contained in the capsule or otherwise diluting the liquid concentrate contained therein. In other words the injection of the solvent inside the capsule allows for the constitution of the beverage from the ingredient enclosed therein. The beverage thus constituted then exits the capsule to reach a beverage collector or outlet spout and thence a cup or a container. The injection of the brewing liquid may be obtained by providing a surface of the capsule where holes are provided for, usually these holes being placed on the water inlet surface of the capsule. This solution, though, allows for coffee powder to be spilled outside the capsule during handling or transport and in general a faster oxidization of the foodstuff. For the above reasons it is preferred to utilise capsules in which the inlet means, that is at least one opening for the brewing liquid to penetrate into the capsules, is created on an inlet surface of the capsule, preferably its inlet wall. For this purpose the brewing device is provided, usually in its water inlet wall, with piercing means, usually in the form of one or more protruding parts, such as needles or blades, that are moved with respect to the capsule (or viceversa) for perforating its inlet surface and to protrude, at least in part, through the inlet surface. Openings, or holes, formed by the piercing means allow the passage of the brewing liquid inside the capsule.

Feeding of brewing hot water by piercing the inlet wall of the capsule is a method well known in the art and is disclosed in several prior art documents.

US2778739 discloses a package for beverage infusion having a body and an upper cover that is pierced by protruding elements of the brewing device. A similar concept is disclosed in US2968560 and US3607297.

Recently, some problems have been encountered by using capsule made of plastic polymers instead of capsule made of more rigid and thinner material, such as aluminium. Capsules made of plastics can be difficult to perforate so that full piercing of the capsule wall is not achieved, thereby no solvent e.g. hot water can be injected in the capsule, or only a partial perforation is achieved, thus providing an irregular and unsatisfactory distribution of the solvent inside the capsule and equally irregular quality of the beverage in the cup.

Therefore there is the need of obtaining a good perforation of capsules, especially of capsules made of materials harder than aluminium, such as standard thermoplastic materials, e.g. PE or PP polymers, or degradable plastics or so called bio-materials, e.g. PLA.

For facilitating the perforation by piercing means of the brewing device plastic capsules have been provided with reinforcing members, for example as disclosed in the international patent application WO2011/027259.

WO2011/027259 discloses a capsule having reinforcing means provided on its lateral wall in the form of a plurality of circular ribs, or an annular protruding member, and similar.

These solutions require, ceteris paribus, a higher mass of thermoplastic material during the production process, resulting in a heavier, less environmental-friendly capsule. Also, in any case, reinforcing members provided on the outer wall of the capsule may prove only partially effective for the reinforcement of the inlet wall in the areas where it has to be perforated.

EP2287090 and the divisional application EP2308776 disclose a capsule, and a system for the beverage preparation comprising a brewing device and a capsule. The capsule is provided with an inlet wall provided with a portion thinner than the rest of the wall, in the position where the piercing elements of the brewing apparatus will impinge, so as to facilitate the penetration of blades of the water injection device. Such thinning of the walls allows, though, for the deformation of the walls. For this reason reinforcement ribs are provided, too, extending both on the inlet wall and on the side wall of the capsule, thus avoiding undesired deformation of the capsule when piercing means of the brewing device exert a perforation force on the inlet wall of the capsule. However, reinforcing members that are disposed on the inlet wall of the capsule need to be dimensioned, positioned and oriented in an accurate manner so as to not be impinged by the piercing means of the capsule. In fact, should these ribs be contacted by the piercing blades of the brewing device, they would prove very difficult if not impossible to perforate due to the additional material that determines an increase of the thickness of the inlet wall of the capsule in correspondence of the ribs.

It is an aim of the present invention to solve the above problems and to provide a capsule, and a system for the beverage preparation using such capsule that can be pierced in a simple and effective manner without undesired deformation of the capsule, and in particular of its inlet wall.

Another aim of the present invention is to provide adequate reinforcement to the area where the piercing means of the brewing device need to penetrate the capsule wall (preferably the capsule inlet wall), yet minimising the increase of capsule material needed to achieve such objective.

Another aim of the present invention is to provide a capsule, and a system comprising such capsule, that can be produced in a simple manner without the need of providing a portion of reduced thickness on the inlet wall of the capsule depending on the position of the piercing means of the brewing device. The prior art is also disclosed in documents US 2010/064899 A1, WO2012/080501 A1, WO2011/159162 A1 and EP 2 287 090 A1.

### Summary of the invention

These and other aims are achieved by means of the capsule of the present invention, that is a capsule for the preparation of a beverage from a dose of a product, according to claim 1.

The present capsule may be manufactured in plastics, bio-plastics, so-called "green"-plastics (that is plastics derived from renewable sources) and more in general in materials bearing a higher tensile strength than aluminium. Such capsule comprises a lateral wall, an inlet wall and an outlet wall forming a hollow body where foodstuff is contained.

The inlet wall of the capsule comprises a piercing area that is pierced by a brewing device comprising piercing means extending along a predetermined path for perforating said capsule to inject a brewing liquid into the said capsule.

The capsule is such that the piercing area of the inlet wall comprises at least one portion protruding outside said inlet wall. The protruding portion comprises an inner lateral wall, an external lateral wall and a perforating wall that, in use, is impinged by piercing means of the brewing device in order to provide the capsule perforation for allowing the passage of the brewing liquid inside the capsule.

It has to be noted that the distance between the inner and outer lateral walls of the protruding portion corresponds to the width (w) of the perforating wall intended to be impinged by the piercing means of the brewing device during the use of the capsule for the beverage preparation.

According to the present invention, the width of the perforating wall, corresponding to the distance between said inner and outer lateral walls, is comprised in the range 1.5 mm to 5 mm and preferably in the range 2 mm to 4 mm. By doing so, the perforating wall can be effectively perforated by the piercing means of the brewing device, thus ensuring the desired amount of brewing liquid to be injected into the capsule hollow body during the beverage preparation process.

Moreover, the at least one protruding portion extends along a circular path of radius (a) measured from a central axis (X) of the capsule. The term "central axis X of the capsule" is used herein to indicate a longitudinal axis of the capsule passing through the inlet wall and outlet wall of the capsule. Additionally, it has to be noted that the radius (a) along which the protruding portion extends is used to indicate a central circumference of the protruding portion. In other words, the inner lateral wall and the outer lateral wall are arranged at equal distance from the circumference having said radius (a).

According to the invention, the radius (a) along which the protruding portion extends is comprised in the range 5 mm to 9 mm, and more preferably in the range 6 mm to 8 mm, measured from the central axis (X) of the capsule as disclosed above.

According to an aspect of the invention, the width of the perforating wall, that is equal to the distance between the inner lateral wall and the outer lateral wall of the protruding portion, allows the passage of at least part of the piercing means of the brewing device between said inner and outer lateral walls.

Advantageously, the capsule according to the invention can be easily perforated without any undesired deformation. When the piercing means enter into contact with the perforating wall, the force applied causes the capsule perforation without undesired deformation. In fact, the inner and outer later walls of the protruding portion impart the required rigidity to the upper portion of the capsule, in particular to the perforating wall, and ensure the rigidity required for a reliable and sure perforation.

According to a possible embodiment, the width of the perforating wall is equal to or greater than the dimension of the part of piercing means in contact with the perforating wall. Preferably, the width of the perforating wall is 1.2 to 3 times greater than the dimension of the part of said piercing means of the brewing device in contact with the perforating wall, thus providing an effective perforation of the capsule.

Furthermore, contrary to known capsules provided with ribs extending along the upper inlet wall and that could be difficult to pierce due to such addition of material if the ribs are impinged by piercing means of the brewing device, the protruding portion of the capsule according to the present invention is not configured so as to provide a thickness increase of the inlet wall of the capsule.

In fact, according to the invention, the thickness of the perforating wall can be equal to or less than the thickness of the inner lateral wall and/or of the outer lateral wall of the protruding portion. Moreover the thickness of the perforating wall can be equal to or less than the thickness of the inlet wall of the capsule outside the protruding portion. According to a possible embodiment the thickness of the protruding portion is constant, so that the perforating wall and the inner and outer lateral walls have the same thickness. According to a possible embodiment the inner and outer lateral walls of the protruding portion have the same thickness.

The capsule according to the invention provides, in comparison to designs bearing the same mass of material, a more solid construction for the body of the capsule, which in turn proves advantageous during bulk storage or manipulation of the capsule by the filling machine or by the end-user.

Moreover, the protruding portion of the inlet wall, according to the invention, provides a stiffening of the capsule without use of reinforcing members formed as an addition of material on the inlet wall and/or on the lateral wall, thus improving the environmental friendliness of such capsule, compared to existing reinforcing means. Preferably, the inner lateral wall and the outer lateral wall of the protruding portion are arranged substantially parallel to the central axis of the capsule and the perforating wall is substantially perpendicular to said central axis of the capsule. Moreover, according to a preferred embodiment, the protruding portion has a substantially U-shape section in a plane passing through the central axis of the capsule, thus forming an annular protrusion extending outside the inlet wall of the capsule.

According to a possible embodiment, piercing means of the brewing device comprises a plurality of blades that are arranged along a circular path of a predetermined radius and the protruding portion extends along a circular path of radius equal to the radius of the circular path along which the piercing blades extend. The present invention also relates to a system for the beverage preparation comprising the capsule disclosed herein and a brewing device comprising piercing means arranged along a predetermined path for perforating said capsule to inject a brewing liquid into said capsule.

The system is such that the piercing area of the inlet wall of the capsule comprises at least one portion protruding outside the said inlet wall, said portion comprising an inner lateral wall, an outer lateral wall and a perforating wall that is perforated by said piercing means of said brewing device, wherein the at least one protruding portion extends along a path corresponding to the path along which said piercing means of the brewing device are arranged.

According to an aspect of the present invention the system comprises a capsule wherein the width of the perforating wall, corresponding to the distance between said inner and outer lateral walls, allows the passage of at least part of said piercing means of the brewing device between said inner lateral wall and said outer lateral wall.

According to a possible embodiment the system comprises a capsule having the width of the perforating wall equal to or greater than the dimension, in a radial direction, of the part of said piercing means of the brewing device in contact with said perforating wall.

In the second case, the capsule of the system is provided with the width of the perforating wall, corresponding to the distance between the inner and outer lateral walls is 1.2 to 3 times greater than the dimension of the part of said piercing means of the brewing device in contact with said perforating wall.Advantageously, the piercing means of the brewing device effectively perforate the capsule, in correspondence of the perforating wall, because of the correspondent extension, at least in part, along corresponding paths.

Therefore the protruding portion of the capsule allows the passage of at least part of the piercing means between the inner and outer lateral walls for the perforation of the perforating wall without undesired deformations of the upper part of the capsule.

### Brief Description of the Drawings

Further advantages and features of the present invention will be more apparent from the description below, provided with reference to the accompanying drawings, purely by way of a non-limiting example, wherein:
- Figure 1 is perspective view of the capsule according to the present invention;
- Figure 2 is a radial sectional view from a plane passing trough the central axis of the capsule according to the present invention;
- Figure 3 is a perspective view from below of the capsule according to the present invention;
- Figure 4 is an enlarged view of the protruding portion of the capsule according to the present invention;
- Figure 5 is a partial view of a brewing device used in combination with the capsule shown in Figures 1 - 4.

### Detailed Description

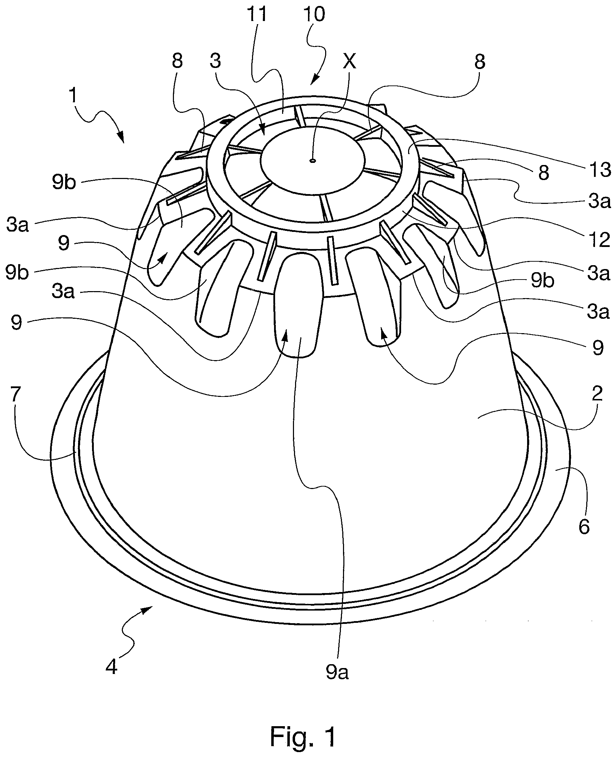

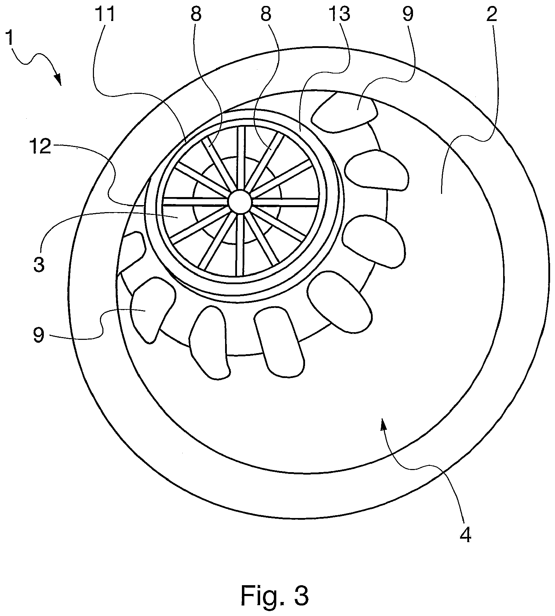

Figures 1 - 3 show an exemplary embodiment of the capsule 1 according to the invention that can be also used in combination with a brewing device in the system for the beverage preparation according to the invention. The preparation of a beverage, such as coffee, tea, hot and cold drinks, or any other liquid foodstuff, is obtained from a pre-determined amount of an extractable or soluble or dilutable product, either liquid or solid, contained inside the capsule. Preferably the dose of product comprise a powder product, such as coffee powder, which is brewed by means of brewing liquid, preferably hot water under pressure, that is injected into the capsule for obtaining the desired beverage.

According to the invention the capsule is used into a brewing device 20 provided with means 21 for piercing the capsule 1, preferably in correspondence of the inlet wall 3 of the capsule in order to feed the brewing liquid, preferably hot water under pressure, inside the capsule. The brewing device 20 is further provided with an enclosing element 22, or receptacle intended to house at least part of the capsule during the beverage preparation process.

In use, the enclosing element 22 of the brewing device 20 is moved with respect to the capsule 1, or vice versa, so that a seal-tight engagement with the capsule 1 can be obtained and the piercing means 21 can be brought in contact with the capsule for its perforation.

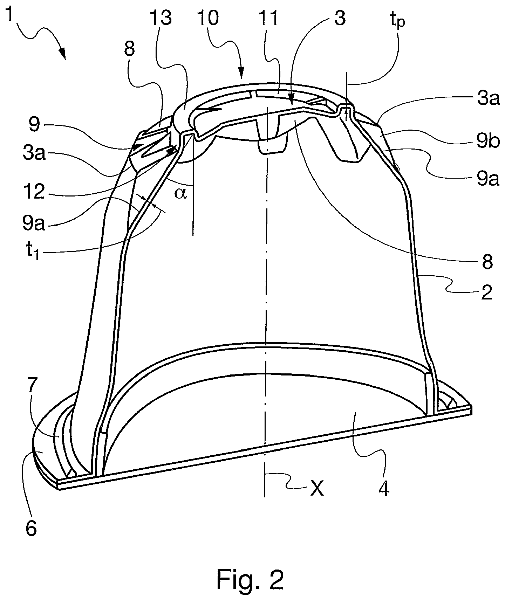

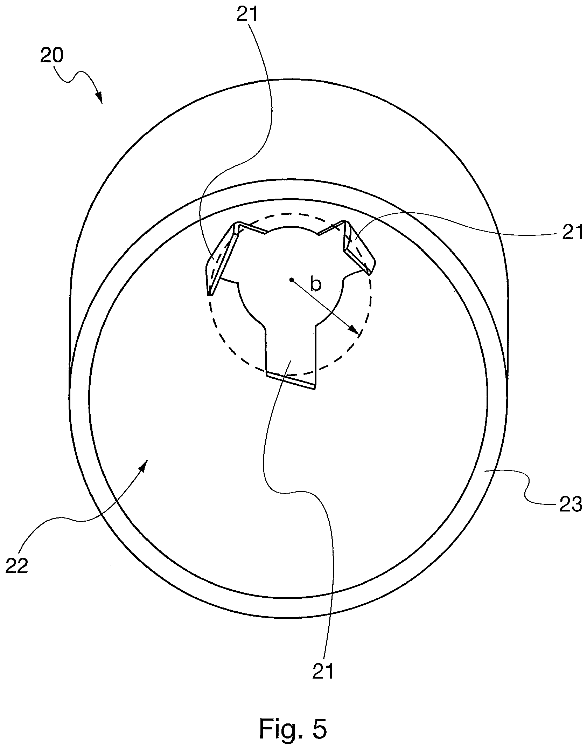

Figure 5 shows a part of a brewing device 20 that can be used in combination with the capsule 1 in the system for the beverage preparation according to the invention. The capsule 1 comprises a lateral wall 2, inlet wall 3 and an outlet wall 4 (visible in figure 2), said walls defining a hollow body 5 where the dose of product is located. The inlet wall 3 is the inlet surface of the capsule and is intended to be perforated by the piercing means 21 of the brewing device to obtain inlet openings allowing the passage of the brewing liquid into the capsule.

The outlet wall 4 allows exit of the brewed beverage from the capsule into a container and, as will be disclosed in greater detail later, outlet means of the capsule, i.e. elements allowing the exit of the brewed beverage can be realized in different manner.

The capsule 1 has a substantially cup-shape, or frustoconical shape, with a central axis X (vertical axis), in other words, in the exemplary embodiment shown in the figures, the lateral wall 2 is not parallel to the central axis X and the hollow body 5 is closed by the outlet wall 4 at one end and by the inlet wall 3 at the opposite end of the lateral wall with respect to the outlet wall 4. It has to be noted that, as visible in the figures, the term "central axis X of the capsule" it is used herein to indicate a longitudinal axis of the capsule passing through the inlet wall 3 and outlet wall 4 of the capsule.

It has to be noted that the inlet wall 3 can be at least partially flat and/or convex and/or tapered, in other words, the inlet wall 3 can be shaped in different manner in order to facilitate both the insertion of the capsule into the receptacle of the brewing device and also the perforation of the inlet wall 3 by piercing means 21 of the brewing device 20.

According to the invention, the inlet wall 3 of the capsule comprises a piercing area that is pierced by the brewing device 20 provided with piercing means 21 extending along a predetermined path for perforating said capsule to inject a brewing liquid into the said capsule. The piercing area of the inlet wall 3 comprises at least one portion 10 protruding outside the inlet wall 3, that comprises an inner lateral wall 11, an external lateral wall 12 and a perforating wall 13.

In use, the perforating wall 13 is impinged by piercing means 21 of the brewing device 20 in order to provide its perforation for allowing the passage of the brewing liquid inside the capsule.

According to an aspect of the present invention, the protruding portion 10 of the inlet wall 3 of the capsule extends at least in part along a path corresponding to the path along which the piercing means 21 of the brewing device 20 are arranged.

In other words, the protruding portion 10 extends along a path that has, at least in part, a correspondent shape of the path along which the piercing means 21 of the brewing device 20 are arranged.

In this manner, the piercing means 21 of the brewing device 20 are able to effectively perforate the capsule, and in particular, the perforating wall 13 of the protruding portion 10.

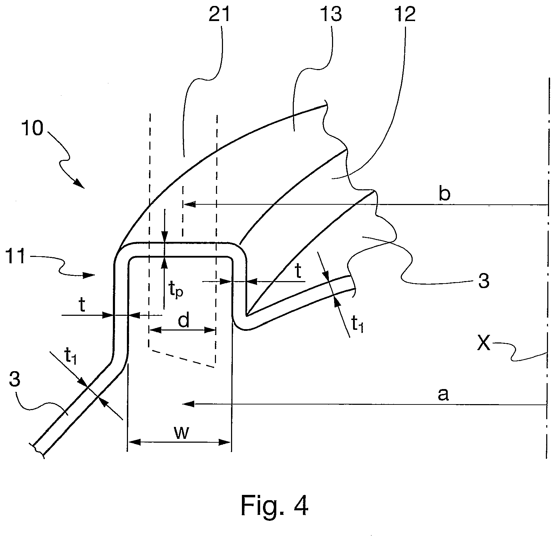

According to a possible embodiment, as shown in the figures, piercing means 21 of the brewing device comprises a plurality of blades that are arranged along a circular path of radius b and the protruding portion 10 extends along a circular path of radius a, equal to the radius b (see the enlarged view of figure 4).

According to the invention, the radius a along which the protruding portion 10 extends is used to indicate a central circumference of the protruding portion. In other words, the inner lateral wall 11 and the outer lateral wall 12 are arranged at equal distance from a central circumference having said radius a.

According to the invention, the radius a is comprised in the range 5 mm to 9 mm, and more preferably in the range 6 mm to 8 mm, measured from the central axis (X) of the capsule as disclosed above. It has to be noted that other shape of the path along which the protruding portion of the capsule extends can be used, while maintaining its shape corresponding, at least in part, to the path along which the piercing means 21 of the brewing device 20 are arranged, thus allowing the effective perforation of the capsule in correspondence of the perforating wall 13 of the protruding portion 10.

According to the invention, the width w of the perforating wall 13, corresponding to the distance between the inner lateral wall 11 and the outer lateral wall 12, allows the passage of at least part of the piercing means 21 of the brewing device 20, between said inner and outer lateral walls 11, 12.

According to a possible embodiment, the width w of the perforating wall 13, corresponding to the distance between said inner and outer lateral walls 11, 12 is equal to or greater than the dimension d of the part of piercing means 21 of the brewing device in contact with the perforating wall 13 (see in particular figure 4). According to a possible embodiment, the dimension d corresponding to the thickness of the piercing means 21 is 0.5 mm.

In fact, at least part of the piercing means 21 enters into contact with the perforating wall 13 of the capsule for the beverage extraction, in order to provide at least a passage for the brewing liquid that has to be injected into the capsule. The width w of the perforating wall 13 is equal to or greater than the dimension d of the piercing means 21, preferably measured in a radial direction from the central axis X of the capsule, thus allowing the passage of at least part of the piercing means 21 between the inner and outer lateral walls 11, 12 for the perforation of the perforating wall 13. It has also to be noted that the width w of the perforating wall is measured between the internal surfaces of said inner and outer lateral walls 11, 12 of the protruding portion 10, as shown in figure 4.

Preferably, the width w of the perforating wall 13 is 1.2 to 3 times greater than the dimension d of the part of said piercing means of the brewing device in contact with said perforating wall 13, thus providing an effective perforation of the capsule. Advantageously the presence of a perforating wall 13 having a width w greater than the dimension d of the part of said piercing means of the brewing device in contact with said perforating wall 13, allows to obtain a reliable perforation of the perforating wall 13, when the piercing means are brought in contact with the capsule, and also the reliable extraction of the piercing means when the latter are retracted outside the perforating wall 13.

According to the invention, width w of the perforating wall 13 corresponding to the distance between said inner and outer lateral walls 11, 12 is comprised in the range 1.5 mm to 5 mm, and preferably in the range 2 mm to 4 mm. By doing so, during the capsule use into a brewing device, the piercing means enter into contact with the perforating wall, and the applied force causes the capsule perforation without undesired deformation. In fact, the distance between the inner and outer later walls of the protruding portion (i.e. said width w), comprised in the above reported ranges, ensure the required rigidity to the upper portion of the capsule, and in particular to the perforating wall, and at the same time allow the free passage of the piercing means between the inner and outer lateral walls 11, 12 of the protruding portion 10.

In the shown embodiment, piercing means 21 comprise a plurality of blades that are able to pass, at least in part, inside the capsule by piercing the perforating wall 13. The width w of the perforating wall 13, i.e. the distance between inner and outer lateral walls 11, 12, is equal to or greater than the dimension d, measured in a radial direction from the central axis of the capsule X (see figure 4) of the blades.

Advantageously, the perforating wall 13 provided with a width w equal to or greater than the dimension d of the piercing means that are brought in contact with it, and having inner and outer lateral walls 11, 12, allows the effective perforation of the capsule without undesired deformations.

In fact, when the piercing means 21 enters into contact with the perforating wall 13, the force applied thereon provides the perforation of the wall 13 without undesired deformation because of the inner and outer later walls 11, 12 of the protruding portion 10. In fact, said lateral walls 11, 12 impart the required rigidity to the upper portion of the capsule, and ensure the rigidity required for a reliable and sure perforation.

Moreover, piercing means 21 can be easily retracted outside the perforating wall 13 at the end of the beverage preparation when the capsule has to be discharged outside the brewing device.

As shown in the figures, the inner lateral wall 11 and the outer lateral wall 12 of the protruding portion 10 are arranged substantially parallel to a central axis X of the capsule and the perforating wall 13 is substantially perpendicular to a central axis X of the capsule.

It has to be noted that the term "substantially" is used herein to indicate that the inner and outer lateral walls 11, 12 can be also slightly inclined with respect from the shown embodiment wherein they are parallel to the central axis X of the capsule. Similarly, the perforating wall 13 can be arranged slightly inclined with respect to the horizontal and with respect to the position shown in the figures wherein it is perpendicular to the central axis X of the capsule. However, according to other possible embodiments, the inner and outer lateral walls 11, 12, and the perforating wall 13, can be inclined with respect to the central axis X of the capsule. Moreover, the inner and outer lateral walls 11, 12 can be arranged with different inclinations with respect to the central axis X of the capsule, and in a possible embodiment the inner and outer lateral walls 11, 12 are not parallel to each other.

In any case, perforating wall 13 has to be arranged to provide a surface that can be easily contacted and perforated by piercing means 21 of the brewing device 20, and the inner and outer lateral walls 11, 12 have to provide a passage for at least a part of the piercing means 21 and, at the same time, the required rigidity to the upper part of the capsule.

According to a preferred embodiment, the protruding portion 10 has a substantially U-shape section in a plane passing through the central axis X of the capsule, see figure 2. Therefore, in the embodiment shown in the figures, the protruding portion 10 is in the form an annular protrusion.

It has to be noted that according to different embodiments, the protruding portion 10 extends continuously or discontinuously along at least part of the path along which said piercing means of the brewing device are arranged.

Thus, the capsule 1 can be provided with a single protruding portion 10, as shown in the figures, or with two or more separated protruding portions 10 extending along the path along which said piercing means of the brewing device are arranged.

Moreover, according to a possible embodiment, on the perforating wall 13 cut lines, or cut points or cut areas can be provided in order to facilitate the perforation of the capsule. It has to be noted that cut lines, points or areas can be made as opened passages for the brewing liquid, or provided in the form of a thickness reduction of the perforating wall 13, to be opened by a force applied on it, for example the force caused by piercing means 21 or by the brewing liquid injected by the brewing device. Advantageously, the thickness tp of the perforating wall 13 is equal to or less than the thickness t of the inner lateral wall 11 and of the outer lateral wall 12. In the embodiment shown in the figures the thickness tp of the perforating wall 13 is equal to the thickness of both the inner and outer lateral walls 11, 12.

In other words, in the embodiment shown in the figures the thickness t of the protruding portion 10 is constant, i.e. the perforating wall 13 and the inner and outer lateral walls 11, 12 have the same thickness tp, t (see figure 4).

If the perforating wall 13 is provided with a reduced thickness tp with respect to the thickness of the outer and/or outer lateral walls 11, 12, a properly rigidity of the inlet wall of the capsule and in particular of the perforating wall is maintained due to the presence of the inner and outer lateral walls 11, 12 of the protruding portion 10, acting as vertical reinforcing walls.

Moreover, it has to be noted that the thickness t of the inner lateral wall 11 can be equal to the thickness t of the outer lateral wall 12 or it can be different, according to other possible embodiments not shown in the figures.

According to different possible embodiments, the thickness tp of the perforating wall 13 can be produced equal to or less than the thickness t1 of the inlet wall 3 of the capsule outside the protruding portion 10.

In any case, the capsule 1, according to the invention, can be easily produced, for example by thermoforming, injection moulding, and other known process, without the need of addition of material in order to reach the desired rigidity of the capsule. According to different possible embodiments, the perforating wall 13 of the protruding portion 10 can be made of the same material of the capsule, or by a foil, for example made of aluminium, that is constrained to the inner and outer lateral walls 11, 12. The capsule 1 may comprise a flange-like rim 6 extending outside said lateral wall 2, and at least one sealing means 7 intended to cooperate with at least part of the brewing device to provide a seal-tight engagement of the capsule.

In the shown exemplary embodiment, a sealing element 7 is provided on the flange-like rim 6 of the capsule, i.e. the portion of the capsule designed to be brought in contact with the receptacle 22 of the brewing device, and in particular with the lower edge 23 of the receptacle, i.e. the pressing portion of the receptacle 22, for providing the sealing engagement.

Preferably the sealing member 7 is produced in one piece with the capsule and is shaped as an element protruding from the flange-like rim 6 of the capsule. Moreover, even if the protruding portion 10 of the capsule 1 increases the capsule rigidity, thus allowing an effective and sure perforation, additional reinforcing means 8 are provided. As shown in the figures, the capsule 1 comprises at least one rib 8 and at least one recessed portion 9 extending on the inlet wall 3 and/or on the lateral wall 2 of the capsule. Reinforcing means, for example in the form of ribs 8 and or recessed portions 9, cooperate with the protruding portion 10 of the capsule 1 to provide the necessary rigidity to the inlet and lateral walls of the capsule, thus allowing the effective perforation thereof.

The capsule shown in the figures is provided with a plurality of recessed portions 9, which are also disclosed in a co-pending patent application also in the name of the present applicant, extending on and connecting together the inlet wall 3 and on the lateral wall 2. Recessed portions 9 form a corrugation in correspondence of the peripheral end of the lateral wall 2 and define a modification of the shape of both the inlet wall 3 and of the lateral wall 2.

Recessed portion 9 comprises at least one surface 9a connecting the lateral wall 2 to the inlet wall 3 of the capsule forms in fact an additional wall that connects lateral and inlet walls 2, 3, and is angled with respect to both of them. More in details, the surface 9a formed by the recessed portions 9 connects the inlet and lateral walls 3, 2 of the capsule respectively above and below the circumferential line 3a connecting the inlet and lateral walls 3, 2 outside the recessed portions 9 (see figures 1 and 2). The recessed portion 9 can be seen as the "removal" of a portion of volume of the capsule from the junction (peripheral edge) between inlet 3 and lateral 2 walls; thus, the walls are modified and they "sink" below their original level to rise again to the original level and shape. Exemplary shapes of the removed volume are prisms or portions of prisms, preferably a prism selected from parallelepiped, cylinder and hexagonal base prisms. So that the at least one surface of the recessed portion 9 "belongs" to at least a portion of a prism used, in designing, to "remove" a volume of the capsule.

According to a possible embodiment, the additional wall 9a, i.e. the surface 9a formed by the recessed portion 9, connects the outer lateral wall 12 of the protruding portion 10 to the lateral wall 2 of the capsule. The surface 9a formed by the recessed portion 9 is inclined (angled) with respect to both lateral and inlet walls 2, 3 and is connecting said walls 2, 3. In the embodiment shown in the figures, the recessed portion 9 comprises at least one inclined surface 9a with respect to the central axis X of the capsule. Preferably, the inclined surface 9a forms an acute angle α (visible in figure 2) with the vertical, i.e. with respect to direction parallel to the central axis X of the capsule.

Preferably the acute angle α, as defined above, is comprised in the range 10° - 65°. More in detail, in the embodiment shown in attached figures, each recessed portion 9 is formed by an inclined surface 9a that is connected with two lateral surfaces 9b. The inclined surface 9a, is substantially flat and is inclined with respect to the vertical, and the angle α formed between the inclined surface 9a and the vertical, i.e. a direction parallel to the central axis X, is an acute angle.

The lateral surfaces 9b of the recessed portion 9 are, preferably, arranged on a plane passing through or parallel to the central axis X of the capsule.

According to an aspect of the present invention, the recessed portions 9 are radially arranged with respect to the central axis X of the capsule, and preferably the capsule comprises a plurality of recessed portions 9 arranged with constant, or not constant, spacing along the peripheral end of the lateral wall 2, thus providing an uniform stiffening of both the lateral wall and the inlet wall of the capsule.

Advantageously the recessed portions 9 provided on the capsule surface on both the lateral wall 2 and the inlet wall 3 provide an effective reinforcement of the capsule thus avoiding undesired deformation thereof by piercing means of the brewing device.

According to other possible embodiment, not shown in the figures, the recessed portions 9 are produced only on the inlet wall 3 of the capsule.

The capsule according to the invention can be provided with reinforcing ribs 8 arranged laterally with respect to the protruding portion 10 and connecting the inner and outer lateral walls 11, 12 with the inlet wall 3 of the capsule.

Obviously, other arrangement of the reinforcing ribs 8 could be provided. For example, according to a possible embodiment the reinforcing ribs 8 are provided connecting only one of the outer lateral walls 11, 12 (i.e. the inner or the outer lateral wall) of the protruding portion 10 with the inlet wall 3 of the capsule 1.

In the embodiment shown in the figures, the ribs 8 of the outer lateral wall 12 are arranged in correspondence of the spaces between two recessed portions 9, but other arrangement of the reinforcing ribs 8 can be provided.

It has to be noted that, in other possible embodiments, not shown in the figures, the capsule can be provided only with reinforcing ribs 8, or only with recessed portions 9.

Moreover, as shown in the figures, the capsule 1 could be provided with a plurality of ribs 8 protruding from the internal, or external, surface of the inlet wall 3. The ribs 8 are preferably arranged in a radial manner from the internal central surface of the inlet wall 3, substantially from the central axis X.

In the exemplary embodiment shown in the figures (see in particular figure 2), outlet wall 4, or the wall comprising the outlet from which the beverage exits the capsule, is a separate element which is connected to the lower portion of the capsule body 5, in order to close the capsule. Any suitable constraint means of the outlet wall 4 to the capsule body 5 can be used, and in other possible embodiments the outlet wall 4 may be produced in one piece with the capsule. Moreover, the outlet wall may be produced in different material with respect to the capsule material, for example, the outlet wall 4 may be a porous or non porous membrane, for instance an aluminium foil or a paper filter, a non woven fabric or a cap in thermoplastic or similarly rigid or semirigid material provided with holes, as already known in other capsules for the production of beverage.

According to known embodiments outlet means may comprise one or more opening on the surface of the capsule, self-perforating elements that are broken under mechanical and/or pressure force acting on the capsule, or one or more holes that are produced by piercing means of the brewing device. Alternatively, inlet and outlet means are open passages.

According to a possible embodiment, the capsule is provided with outlet means in the form of one self-perforating element located on outlet wall 4.

The self-perforating element is protruding from the lower surface of bottom wall 4, and is defined by grooves, or lines with reduced thickness, that are breakable under the action of the mechanical force exerted by the brewing device and/or the force exerted by the water fed into the capsule. This type of self-perforating elements is described in detail in application WO2007/063411, in the name of the present applicant, to which reference is made for further details. The capsule can be provided with one, centrally located, outlet; or have a plurality of smaller outlets located in different positions, e.g. peripherally or radially.

Another type of outlet means has a plurality of protrusions, but the reduced thickness periphery of the rib is replaced by a cut area of the wall, along three sides of the outlet, the hinge portion being still present; additionally, in this embodiment the outlets can protrude both outwardly and inwardly with respect to wall 4. It has to be noted that the above mentioned outlet elements can be opened under the action of the mechanical force, or by means of the brewing liquid pressure, or as a result of the combined action of the brewing liquid pressure with the mechanical force exerted by the brewing device, or by hydraulic force exerced by the pump.

Other types of outlet means can be provided, i.e. the extraction of the beverage from the capsule can be obtained, for example, by perforating the capsule by suitable piercing means of the brewing device; in another embodiment, the outlet means is a water-soluble membrane.

According to a possible embodiment the capsule is produced in a plastic material approved for the use of comestibles product, for example polypropylene or PLA (polylactic acid), that is also resistant both to high temperature and pressure of the brewing liquid injected in its inside during the beverage preparation process.

## Claims

1. A capsule for preparing a beverage comprising a lateral wall (2), an inlet wall (3) and an outlet wall (4) forming a hollow body (5) where a brewing product is contained, said inlet wall comprising a piercing area, wherein said area is intended to be pierced by a brewing device (20) comprising piercing means (21) extending along a predetermined path for perforating said capsule to inject a brewing liquid into the said capsule, **characterized in that** said piercing area of the inlet wall (3) comprises at least one portion (10) protruding outside the said inlet wall (3), said portion (10) comprising an inner lateral wall (11), an outer lateral wall (12) and a perforating wall (13), wherein the width (w) of the perforating wall (13) corresponds to the distance between said inner and outer lateral walls (11, 12), wherein said width (w) of the perforating wall (13) is comprised in the range 1.5 mm to 5 mm and preferably in the range 2 mm to 4 mm, and wherein said at least one protruding portion (10) extends along a circular path of radius (a) measured from a central axis (X) of the capsule, said inner lateral wall (11) and said outer lateral wall (12) being arranged at equal distance from said radius (a), said radius (a) being comprised in the range 5 mm to 9 mm, and more preferably in the range 6 mm to 8 mm,
said capsule being **characterized in that**
J the capsule further comprises reinforcing means comprising at least one rib (8) extending on said inlet wall (3) from at least one of said inner and outer lateral walls (11, 12) of said protruding portion (10) to externally reinforce said protruding portion.

2. A capsule according to claim 1, wherein said inner lateral wall (11) and said outer wall (12) of the protruding portion (10) are arranged substantially parallel to a central axis (X) of the capsule.

3. A capsule according to any preceding claims, wherein said perforating wall (13) is substantially perpendicular to a central axis (X) of the capsule.

4. A capsule according to any preceding claims, wherein said at least one protruding portion (10) has a U-shape section in a plane passing trough a central axis (X) of the capsule.

5. A capsule according to any preceding claims, wherein the thickness (tp) of said perforating wall (13) is equal to or less than the thickness (t1) of the inlet wall (3) of the capsule outside said protruding portion (10).

6. A capsule according to any preceding claims, wherein said perforating wall (13) is made of the same material of the capsule, or it is a foil constrained to said inner and outer lateral walls (11, 12).

7. A capsule according to any preceding claim comprising at least one recessed portion (9) extending on said inlet wall (3) and/or on the lateral wall (2) of the capsule.

8. A capsule according to claim 7, wherein said at least one recessed portion (9) comprises at least one surface (9a) connecting said inlet wall (3) to said lateral wall (2) of the capsule.

9. A capsule according to claim 8, wherein said surface (9a) of said at least one recessed portion (9) is inclined with respect to both said lateral wall (2) and said inlet wall (3).

10. A capsule according to claim 8 or 9, wherein said surface (9a) of said at least one recessed portion (9) is inclined with respect to the central axis (X) of the capsule of an angle (α) comprised in the range 10° - 65°.

11. A capsule according to any claims 7 to 10, wherein said at least one recessed portion (9) comprises a surface (9a) connecting said outer lateral wall (12) of the protruding portion (10) to said lateral wall (2).

12. A system for preparing a beverage, the system comprising a capsule (1) according to any of the preceding claims and a brewing device (20) comprising piercing means (21) arranged along a predetermined path for perforating said capsule to inject a brewing liquid into said capsule, wherein said perforating wall (13) can be perforated by said piercing means of said brewing device, said at least one protruding portion (10) extending along a path corresponding to the path along which said piercing means of the brewing device perforate said inlet wall.

13. A system according to claim 12, wherein the width (w) of the perforating wall (13) corresponding to the distance between said inner and outer lateral walls (11, 12) allows the passage of at least part of said piercing means (21) of the brewing device (20) between said inner lateral wall (11) and said outer lateral wall (12).

14. A system according to claim 12 or 13, wherein the width (w) of said perforating wall (13), corresponding to the distance between said inner and outer lateral walls (11, 12) is equal to or greater than the dimension (d), in a radial direction, of the part of said piercing means (21) of the brewing device in contact with said perforating wall (13), preferably the width (w) of said perforating wall (13), corresponding to the distance between said inner and outer lateral walls (11, 12) is 1.2 to 3 times greater than the dimension (d) of the part of said piercing means of the brewing device in contact with said perforating wall (13).

15. A system according to any claim 12 - 14, wherein said at least one protruding portion (10) extends along a circular path of radius (a) equal to the radius (b) of the circular path along which said piercing means of the brewing device are arranged.

## Patentansprüche

1. Kapsel zur Herstellung eines Getränks, umfassend eine Seitenwand (2), eine Einlasswand (3) und eine Auslasswand (4), wobei die Kapsel einen Hohlkörper (5) bildet, in dem ein Brühprodukt enthalten ist, wobei die Einlasswand einen Durchstechbereich umfasst, wobei dieser Bereich dazu ausgebildet ist, von einer Brühvorrichtung (20) umfassend Durchstechmittel (21) durchstochen zu werden, welche sich entlang einer vorbestimmten Bahn zum Perforieren der Kapsel erstrecken, um so eine Brühflüssigkeit in die Kapsel zu injizieren, **dadurch gekennzeichnet, dass** der Durchstechbereich der Einlasswand (3) mindestens einen von der Einlasswand (3) nach außen vorstehenden Abschnitt (10) umfasst, wobei der Abschnitt (10) eine innere Seitenwand (11), eine äußere Seitenwand (12) und eine Perforationswand (13) aufweist, wobei die Breite (w) der Perforationswand (13) dem Abstand zwischen den inneren und äußeren Seitenwänden (11, 12) entspricht, wobei die Breite (w) der Perforationswand (13) im Bereich von 1,5 mm bis 5 mm und vorzugsweise im Bereich von 2 mm bis 4 mm umfasst ist, und wobei sich der wenigstens eine vorstehende Abschnitt (10) entlang einer kreisförmigen Bahn mit einem von einer zentralen Achse (X) der Kapsel gemessen Radius (a) erstreckt, wobei die innere Seitenwand (11) und die äußere Seitenwand (12) in gleichem Abstand zum Radius (a) angeordnet sind, wobei der Radius (a) im Bereich von 5 mm bis 9 mm und bevorzugter im Bereich von 6 mm bis 8 umfasst ist, wobei die Kapsel
**dadurch gekennzeichnet ist, dass** die Kapsel ferner Verstärkungsmittel umfasst, die wenigstens eine Rippe (8) umfassen, welche sich auf der Einlasswand (3) von wenigstens einer der inneren und äußeren Seitenwände (11, 12) des vorstehenden Abschnitts (10) ausgehend erstreckt, um den vorstehenden Abschnitt extern zu verstärken.

2. Kapsel gemäß Anspruch 1, wobei die innere Seitenwand (11) und die äußere Seitenwand (12) des vorstehenden Abschnitts (10) im Wesentlichen parallel zu einer zentralen Achse (X) der Kapsel angeordnet sind.

3. Kapsel gemäß einem der vorhergehenden Ansprüche, wobei die Perforationswand (13) im Wesentlichen senkrecht zu einer zentralen Achse (X) der Kapsel steht.

4. Kapsel gemäß einem der vorhergehenden Ansprüche, wobei der wenigstens eine, vorstehende Abschnitt (10) in einer durch eine zentrale Achse (X) der Kapsel verlaufenden Ebene einen U-förmigen Querschnitt aufweist.

5. Kapsel gemäß einem der vorhergehenden Ansprüche, wobei die Dicke (tp) der Perforationswand (13) gleich oder kleiner ist als die Dicke (t1) der Einlasswand (3) der Kapsel außerhalb des vorstehenden Teils (10).

6. Kapsel gemäß einem der vorhergehenden Ansprüche, wobei die Perforationswand (13) aus dem gleichen Material wie die Kapsel besteht oder eine auf die inneren und äußeren Seitenwände (11, 12) beschränkte Folie ist.

7. Kapsel gemäß einem der vorhergehenden Ansprüche, umfassend wenigstens einen vertieften Abschnitt (9), der sich in der Einlasswand (3) und/oder in der Seitenwand (2) der Kapsel erstreckt.

8. Kapsel gemäß Anspruch 7, wobei der wenigstens eine vertiefte Abschnitt (9) wenigstens eine, die Einlasswand (3) mit der Seitenwand (2) der Kapsel verbindende Fläche (9a) aufweist.

9. Kapsel gemäß Anspruch 8, wobei die Fläche (9a) des wenigstens einen vertieften Abschnitts (9) sowohl bezüglich der Seitenwand (2) als auch der Einlasswand (3) geneigt ist.

10. Kapsel gemäß Anspruch 8 oder 9, wobei die Fläche (9a) des wenigstens einen vertieften Abschnitts (9) bezüglich der zentralen Achse (X) der Kapsel in einem Winkel (α) im Bereich von 10 ° bis 65 ° geneigt ist.

11. Kapsel gemäß einem der Ansprüche 7 bis 10, wobei der wenigstens eine vertiefte Abschnitt (9) eine Fläche (9a) aufweist, welche die äußere Seitenwand (12) des vorstehenden Abschnitts (10) mit der Seitenwand (2) verbindet.

12. System zur Herstellung eines Getränks, wobei das System eine Kapsel (1) gemäß einem der vorhergehenden Ansprüche und eine Brühvorrichtung (20) umfasst, welche Durchstechmittel (21) umfasst, die entlang einer vorbestimmten Bahn zum Perforieren der Kapsel angeordnet sind, um eine Brühflüssigkeit in die Kapsel zu injizieren, wobei die Perforationswand (13) durch die Durchstechmittel der Brühvorrichtung perforiert werden kann, wobei der wenigstens eine vorstehende Abschnitt (10) sich entlang einer Bahn erstreckt, die derjenigen Bahn entspricht, entlang derer die Durchstechmittel der Brühvorrichtung die Einlasswand perforieren.

13. System gemäß Anspruch 12, wobei die Breite (w) der Perforationswand (13), die dem Abstand zwischen den inneren und äußeren Seitenwänden (11, 12) entspricht, den Durchtritt von zumindest einem Teil der Durchstechmittel (21) der Brühvorrichtung (20) zwischen der inneren Seitenwand (11) und der äußeren Seitenwand (12) erlaubt.

14. System gemäß Anspruch 12 oder 13, wobei die Breite (w) der Perforationswand (13), welche dem Abstand zwischen den inneren und den äußeren Seitenwänden (11, 12) entspricht, gleich oder größer ist als die Abmessung (d), in radialer Richtung, desjenigen Teils der Durchstechmittel (21) der Brühvorrichtung, welcher die Perforationswand (13) kontaktiert, vorzugsweise ist die Breite (w) der Perforationswand (13), welche dem Abstand zwischen den inneren und den äußeren Seitenwänden (11, 12) entspricht, 1,2 bis 3 mal größer als die Abmessung (d) desjenigen Teils der Durchstechmittel (21) der Brühvorrichtung, welcher die Perforationswand (13) kontaktiert.

15. System gemäß Anspruch 12 bis 14, wobei sich der wenigstens eine vorstehende Abschnitt (10) entlang einer kreisförmigen Bahn mit einem Radius (a) erstreckt, der gleich dem Radius (b) der kreisförmigen Bahn ist, entlang derer die Durchstechmittel der Brühvorrichtung angeordnet sind.

## Revendications

1. Capsule de préparation d'une boisson comprenant une paroi latérale (2), une paroi d'entrée (3) et une paroi de sortie (4) formant un corps creux (5) qui contient un produit d'infusion, ladite paroi d'entrée comprenant une zone de perçage, dans laquelle ladite zone est destinée à être percée par un dispositif d'infusion (20) comprenant des moyens de perçage (21) s'étendant le long d'un chemin prédéterminé de perforation de ladite capsule pour injecter un liquide d'infusion dans ladite capsule, **caractérisée en ce que** ladite zone de perçage de la paroi d'entrée (3) comprend au moins une portion (10) en saillie à l'extérieur de ladite paroi d'entrée (3), ladite portion (10) comprenant une paroi latérale intérieure (11), une paroi latérale extérieure (12) et une paroi de perforation (13), dans laquelle la largeur (w) de la paroi de perforation (13) correspondant à la distance entre lesdites parois latérales intérieure et extérieure (11, 12), dans laquelle ladite largeur (w) de la paroi de perforation (13) est comprise dans la plage de 1,5 mm à 5 mm et de préférence dans la plage de 2 mm à 4 mm, et dans laquelle ladite au moins une portion en saillie (10) s'étend le long d'un chemin circulaire de rayon (a) mesuré depuis un axe central (X) de la capsule, ladite paroi latérale intérieure (11) et ladite paroi latérale extérieure (12) étant agencées à égale distance dudit rayon (a), ledit rayon (a) étant compris dans la plage de 5 mm à 9 mm et de manière davantage préférée dans la plage de 6 mm à 8 mm,
ladite capsule étant **caractérisée en ce que**
la capsule comprend en outre des moyens de renforcement comprenant au moins une nervure (8) s'étendant sur ladite paroi d'entrée (3) à partir d'au moins une desdites parois latérales intérieure et extérieure (11, 12) de ladite portion en saillie (10) pour renforcer extérieurement ladite portion de saillie.

2. Capsule selon la revendication 1, dans laquelle ladite paroi latérale intérieure (11) et ladite paroi extérieure (12) de la portion en saillie (10) sont agencées de manière sensiblement parallèle à un axe central (X) de la capsule.

3. Capsule selon l'une quelconque des revendications précédentes, dans laquelle ladite paroi de perforation (13) est sensiblement perpendiculaire à un axe central (X) de la capsule.

4. Capsule selon l'une quelconque des revendications précédentes, dans laquelle ladite au moins une portion en saillie (10) a une section en forme de U dans un plan passant à travers un axe central (X) de la capsule.

5. Capsule selon l'une quelconque des revendications précédentes, dans laquelle l'épaisseur (tp) de ladite paroi de perforation (13) est égale ou inférieure à l'épaisseur (t1) de la paroi d'entrée (3) de la capsule à l'extérieur de ladite portion en saillie (10).

6. Capsule selon l'une quelconque des revendications précédentes, dans laquelle ladite paroi de perforation (13) est faite du même matériau de la capsule, ou c'est un film contraint sur lesdites parois latérales intérieure et extérieure (11, 12).

7. Capsule selon une quelconque revendication précédente, comprenant au moins une portion évidée (9) s'étendant sur ladite paroi d'entrée (3) et/ou sur la paroi latérale (2) de la capsule.

8. Capsule selon la revendication 7, dans laquelle ladite au moins une portion évidée (9) comprend au moins une surface (9a) reliant ladite paroi d'entrée (3) à ladite paroi latérale (2) de la capsule.

9. Capsule selon la revendication 8, dans laquelle ladite surface (9a) de ladite au moins une portion évidée (9) est inclinée par rapport à ladite paroi latérale (2) et à ladite paroi d'entrée (3).

10. Capsule selon la revendication 8 ou 9, dans laquelle ladite surface (9a) de ladite au moins une portion évidée (9) est inclinée par rapport à l'axe central (X) de la capsule d'un angle (α) compris dans la plage 10° - 65°.

11. Capsule selon l'une quelconque des revendications 7 à 10, dans laquelle ladite au moins une portion évidée (9) comprend une surface (9a) reliant ladite paroi latérale extérieure (12) de la portion en saillie (10) à ladite paroi latérale (2).

12. Système de préparation d'une boisson, le système comprenant une capsule (1) selon l'une quelconque des revendications précédentes et un dispositif d'infusion (20) comprenant des moyens de perçage (21) agencés le long d'un chemin prédéterminé de perforation de ladite capsule pour injecter un liquide d'infusion dans ladite capsule, dans lequel ladite paroi de perforation (13) peut être perforée par lesdits moyens de perçage dudit dispositif d'infusion, ladite au moins une portion en saillie (10) s'étendant le long d'un chemin correspondant au chemin le long duquel lesdits moyens de perçage du dispositif d'infusion perforent ladite paroi d'entrée.

13. Système selon la revendication 12, dans lequel la largeur (w) de la paroi de perforation (13) correspondant à la distance entre lesdites parois latérales intérieure et extérieure (11, 12) permet le passage d'au moins une partie desdits moyens de perçage (21) du dispositif d'infusion (20) entre ladite paroi latérale intérieure (11) et ladite paroi latérale extérieure (12).

14. Système selon la revendication 12 ou 13, dans lequel la largeur (w) de ladite paroi de perforation (13), correspondant à la distance entre lesdites parois latérales intérieure et extérieure (11, 12) est égale ou supérieure à la dimension (d), dans une direction radiale, de la partie desdits moyens de perçage (21) du dispositif d'infusion en contact avec ladite paroi de perforation (13), de préférence la largeur (w) de ladite paroi de perforation (13), correspondant à la distance entre lesdites parois latérales intérieure et extérieure (11, 12) est 1,2 à 3 fois supérieure à la dimension (d) de la partie desdits moyens de perçage du dispositif d'infusion en contact avec ladite paroi de perforation (13).

15. Système selon l'une quelconque des revendications 12 - 14, dans lequel ladite au moins une portion en saillie (10) s'étend le long d'un chemin circulaire de rayon (a) égal au rayon (b) du chemin circulaire le long duquel lesdits moyens de perçage du dispositif d'infusion sont agencés.
